# EUROPÄISCHE PATENTSCHRIFT

(11) **EP 1 708 922 B1**
(45) Veröffentlichungstag und Bekanntmachung des Hinweises auf die Patenterteilung: **30.09.2009**
(21) Anmeldenummer: 05706973.4
(22) Anmeldetag: 24.01.2005
(51) Int. Cl.: B64D 11/06

(54) **FLUGGASTSITZ**
AIRCRAFT PASSENGER SEAT
SIEGE POUR PASSAGER D'AVION

(30) Priorität: 29.01.2004 DE 102004004339
(43) Veröffentlichungstag der Anmeldung: 11.10.2006
(60) Teilanmeldung: 09010066.0
(73) Patentinhaber: Recaro Aircraft Seating GmbH & Co. KG, 74523 Schwäbisch Hall (DE)
(72) Erfinder: SCHÜRG, Hartmut, 74523 Schwäbisch Hall (DE); FORGATSCH, Oliver, 88709 Meersburg (DE); PILGRAM, Christian, 74523 Schwäbisch Hall (DE)
(74) Vertreter: Daub, Thomas
(86) Internationale Anmeldenummer: PCT/EP2005/000638
(87) Internationale Veröffentlichungsnummer: WO 2005/073083

(56) Entgegenhaltungen:
- WO-A-02/32268
- FR-A- 2 577 776
- US-A- 3 049 374
- US-A- 4 836 602
- US-A- 5 507 556
- US-A- 5 695 240

## Beschreibung

### Stand der Technik

Die Erfindung bezieht sich auf einen Fluggastsitz mit Sitzkomponenten, wie einem Sitzteil und einer Rückenlehne mit einer eine Rückenlehnenpolsterung tragenden Trägerstruktur, an deren Rückseite ein an diese anklappbarer und in eine Gebrauchsstellung wegklappbarer Esstisch sowie ein taschenartiges Behältnis zur Aufnahme von Gebrauchsgegenständen, insbesondere von Druckerzeugnissen und Reiseutensilien, angeordnet sind.

Fluggastsitze dieser Art finden in den derzeit gebräuchlichen Verkehrsflugzeugen, namentlich im Linien- oder Charterflugverkehr, weit verbreitete Anwendung. Bekanntermaßen ist es im gewerblichen Luftverkehr aus wirtschaftlichen Gründen ein vorrangiges Ziel, eine bestmögliche Ausnutzung des Kabineninnenraumes zu erreichen, indem innerhalb eines gegebenen Nutzraumes eine möglichst hohe Anzahl von Fluggastsitzen vorgesehen wird. Gleichzeitig ist jedoch sicherzustellen, dass jedem Fluggast ein im Hinblick auf Sitz- und/oder Reisekomfort ausreichender Kabinenraum, als sog. "Living-Space", zur Verfügung steht. Die bekannten Fluggastsitze werden den an ausreichenden "Living-Space" zu stellenden Anforderungen nicht in ausreichendem Maße gerecht, wenn eine enge Bestuhlung des Kabinenraumes vorgesehen ist, wie es insbesondere bei Luftverkehr in der Economy-Class der Fall ist.

Es ist ferner aus der US 4,836,602 ein Fluggastsitz bekannt, der alle Merkmale des Oberbegriffs des Anspruchs 1 offenfart und bei dem ein Behältnis durch einen Hohlraum gebildet ist, der sich in der Trägerstruktur der Rückenlehne zumindest teilweise zwischen dem angeklappten Esstisch und der Rückenlehnenpolsterung erstreckt.

### Vorteile der Erfindung

Die Erfindung (wie im Anspruch 1 definiert) geht aus von einem Fluggastsitz mit einem Sitzteil und einer Rückenlehne mit einer eine Rückenlehnenpolsterung tragenden Trägerstruktur, an deren Rückseite ein an diese anklappbarer und in eine Gebrauchsstellung wegklappbarer Esstisch sowie ein taschenartiges Behältnis zur Aufnahme von Druckerzeugnissen und Reiseutensilien angeordnet sind, wobei das Behältnis durch einen Hohlraum gebildet ist, der sich in der Trägerstruktur der Rückenlehne zumindest teilweise zwischen dem angeklappten Esstisch und der Rückenlehnenpolsterung und vom Bereich des oberen Randes der Trägerstruktur bis zu einem den Boden des Behältnisses bildenden Strukturelement der Trägerstruktur erstreckt, welches innerhalb des Flächenbereiches des angeklappten Esstisches gelegen ist, und wobei der Hohlraum zur Bildung der Hauptöffnung des Behältnisses in dem an den oberen Rand der Trägerstruktur angrenzenden Bereich zur Rückseite hin offen ist.

Es wird vorgeschlagen, dass die Trägerstruktur der Rückenlehne oberhalb des den Boden des Behältnisses bildenden Strukturelementes eine die Rückwand des Behältnisses bildende, zwischen beiden Seitenrändern der Trägerstruktur durchgehende Platte aufweist, an die der Esstisch anklappbar ist, und dass die die Rückwand des Behältnisses bildende Platte eine Riegeleinrichtung zur Fixierung des Esstisches in der angeklappten Stellung aufweist, wobei die Riegeleinrichtung einen Riegel aufweist, der in der verriegelten Stellung des Esstisches den oberen Rand des angeklappten Esstisches übergreift.

Die Hauptöffnung des Behältnisses und mithin der obere Rand der Trägerstruktur kann um einen Betrag in der Höhe nach unten versetzt sein, so dass insoweit in der Trägerstruktur zusätzlicher Einbauraum entsteht, beispielsweise für die Aufnahme eines Bildschirmes oder dergleichen.

Die zwischen beiden Seitenrändern der Trägerstruktur durchgehende Platte kann bei weggeklapptem Esstisch eine freiliegende Rückwand des Behältnisses bilden.

Zwischen dem unteren Rand der die Rückwand des Behältnisses bildenden Platte und dem den Boden des Behältnisses bildenden Strukturelement kann eine schlitzartige bodenseitige Öffnung des Behältnisses ausgebildet sein, die eine Entnahme von kleinen Dingen, die in dem Behältnis verstaut sind, auf einfache Weise sowie das leichte Reinigen des Behältnisses ermöglicht.

Eine kleine vorspringende Lippe kann an dem die bodenseitige Öffnung des Behältnisses begrenzenden Rand des Strukturelementes vorgesehen sein, um ein Herausrutschen von in dem Behältnis befindlicher Literatur oder kleinerer Reiseutensilien zu verhindern. Ferner kann die Trägerstruktur über einen querverlaufenden Holm unterhalb des Behältnisses zusätzlich verstärkt sein.

Nachstehend ist die Erfindung anhand der Zeichnung im einzelnen erläutert. Es zeigen:
- Fig.1: eine schematisch vereinfacht und teils abgebrochen gezeichnete Darstellung eines Sitzreihen-Abschnittes mit drei Fluggastsitzen gemäß dem Stand der Technik, wobei lediglich der Bereich von deren Rückenlehnen sichtbar ist;
- Fig.2: eine schematisch vereinfacht gezeichnete perspektivische Rückansicht nur des Bereichs der Rückenlehne eines Ausführungsbeispiels des erfindungsgemäßen Fluggastsitzes, wobei der Eßtisch weggelassen ist,
- Fig.3: eine gegenüber Fig.2 vergrößert gezeichnete perspektivische Rückansicht lediglich der Rückenlehne des Ausführungsbeispiels von Fig.2, und
- Fig. 4: eine schematisch vereinfacht gezeichnete perspektivische Rückansicht auf ein weiteres Ausführungsbeispiel mit integriertem Bildschirm.

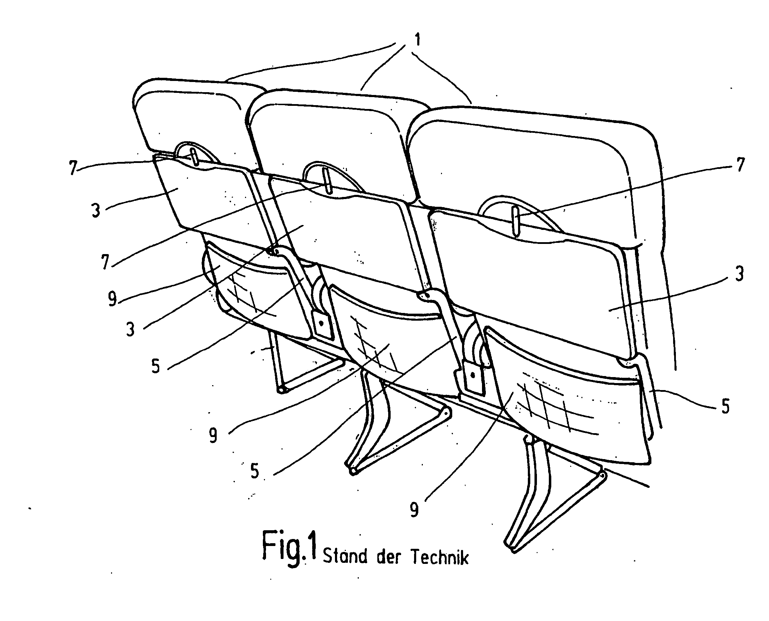

Fig.1 zeigt einen Abschnitt einer Sitzreihe mit drei Fluggastsitzen gemäß dem Stand der Technik, wobei der Bereich von deren Rückenlehnen 1 sichtbar ist. Eßtische 3, die in üblicher Weise an Gelenkarmen 5 beweglich angeordnet sind, sind in Fig.1 jeweils in an die Rückenlehne 1 angeklappter Nicht-Gebrauchsstellung eingezeichnet. In dieser Stellung sind die Eßtische 3 durch in üblicher Weise ausgebildete und angeordnete Verschlußriegel 7 lösbar festlegbar.

Unterhalb der Eßtische 3 befinden sich taschenartige Behältnisse 9, die bei den bekannten Fluggastsitzen in Form von Literaturtaschen oder-beuteln als Netzbeutel oder Beutel mit geschlossener Wand ausgebildet sind. Wie aus Fig.1 zu ersehen ist, wölben sich diese beutel- oder taschenartigen Behältnisse 9, wenn sie mit Literatur, beispielsweise den üblichen Sicherheitsanweisungen für den Flugbetrieb, mit Reiseutensilien, weiterer Literatur und dergleichen befüllt sind, nach hinten aus und schränken die Beinfreiheit des jeweils dahintersitzenden Fluggastes, insbesondere im Kniebereich ein.

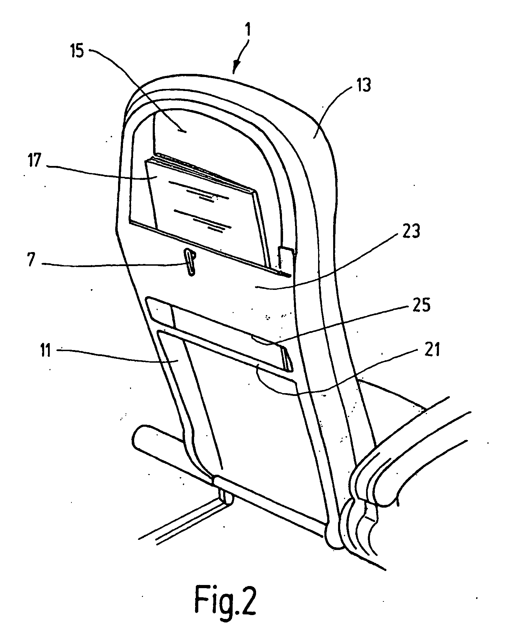

In Fig.2 ist mit der Bezugszahl 11 die Trägerstruktur einer Rückenlehne 1 gemäß einem Ausführungsbeispiel der Erfindung bezeichnet, wobei die Trägerstruktur 11 eine Rückenlehnenpolsterung 13 trägt. Die Fig.2 zeigt die Rückenlehne 1 mit Blickrichtung auf deren Rückseite, wobei im Interesse der Übersichtlichkeit der Eßtisch 3 weggelassen ist, der, wenn er an die Rückseite der Trägerstruktur 11 angeklappt ist, mittels des schwenkbaren Riegels 7 in angeklappter Position verriegelbar ist, wobei der Riegel 7 in üblicher Weise den oberen Rand des angeklappten Eßtisches 3 übergreift.

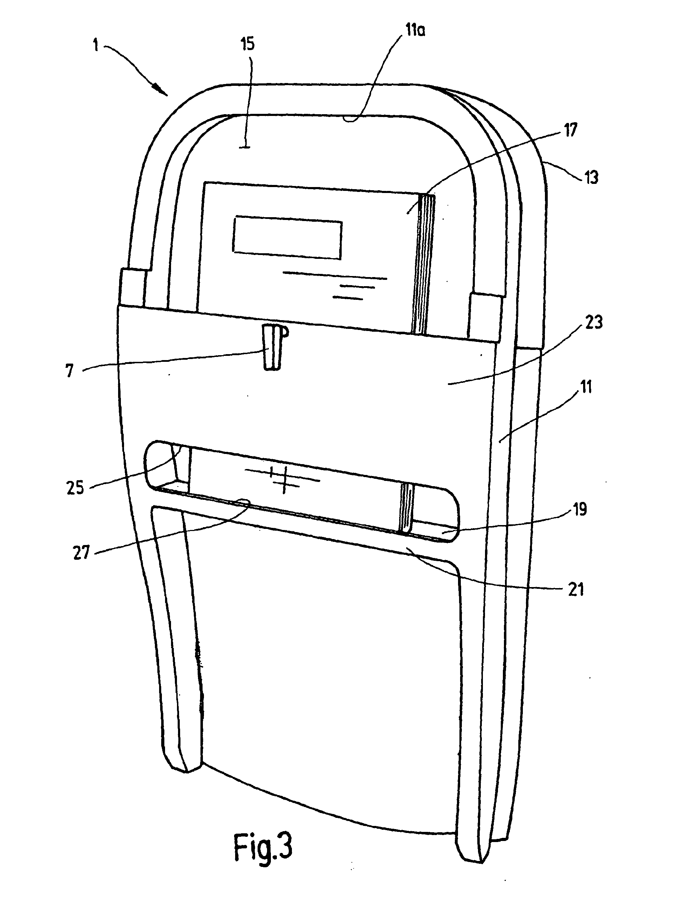

Fig.3 zeigt in deutlicherer Darstellung und in größerem Maßstab die Einzelheiten der Trägerstruktur 11, wobei erkennbar ist, dass in der Trägerstruktur 11 der innere Hohlraum, der sich zwischen der die Rückenlehnenpolsterung 13 tragenden Vorderseite der Trägerstruktur 11 und deren Rückseite in dem Bereich erstreckt, in dem der Eßtisch 3 an die Trägerstruktur 11 anklappbar und mittels des Riegels 7 fixierbar ist, als taschenartiges Behältnis 15 zur Aufnahme von Gegenständen, beispielsweise Literatur 17, genutzt ist. Der Boden 19 des durch den Hohlraum gebildeten Behältnisses 15 ist durch ein von Seitenrand zu Seitenrand der Trägerstruktur 11 quer verlaufendes Strukturelement 21 gebildet. Um das Herausfallen von Gegenständen aus dem Behältnis 15 bei weggeklapptem Eßtisch 3 zu verhindern, erstreckt sich oberhalb des Strukturelementes 21 eine die Rückwand des Behältnisses bildende Platte 23 von Seitenrand zu Seitenrand der Trägerstruktur 11. Diese Platte 23 trägt den beweglichen Riegel 7 für die Verrastung des in der Fig. 1 gezeigten Eßtisches 3.

Zwischen dem den Boden 19 des Behältnisses bildenden Strukturelement 21 und der Platte 23 befindet sich ein eine schlitzartige Öffnung 25 definierender Abstand. Diese bodenseitige Öffnung 25 des durch den Hohlraum gebildeten Behältnisses 15 ermöglicht dessen einfache Reinigung sowie eine bequeme Entnahme kleinerer Utensilien. Um ein unbeabsichtigtes Herausrutschen von Literatur 17 oder anderen Gegenständen zu verhindern, befindet sich an dem den Boden 19 nach außen begrenzenden Rand des Strukturelementes 21 eine rippenartig leicht vorstehende Lippe 27.

Bei den gezeigten Ausführungsbeispielen ist das Behältnis 15 integraler Bestandteil der Rückenlehnen Trägerstruktur 11. Mithin ist für das Behältnis 15 eine Art Hartbox mit steif ausgebildeten Segmentteilen der Rückenlehne realisiert. Insofern ist die Rückenlehnenstruktur trotz.des eingebrachten Behältnisses 15 nach wie vor derart ausgesteift, dass beispielsweise im Crashfall die auftretenden Crash-Kräfte nicht zum Zusammenklappen des Sitzes, insbesondere im Bereich seiner Rückenlehne führen können. Besonders hilfreich ist hierbei auch die querverlaufende, durchgehende Platte 23 zwischen den beiden Seiten- oder Strukturholmen der U-förmig ausgebildeten Trägerstruktur 11.

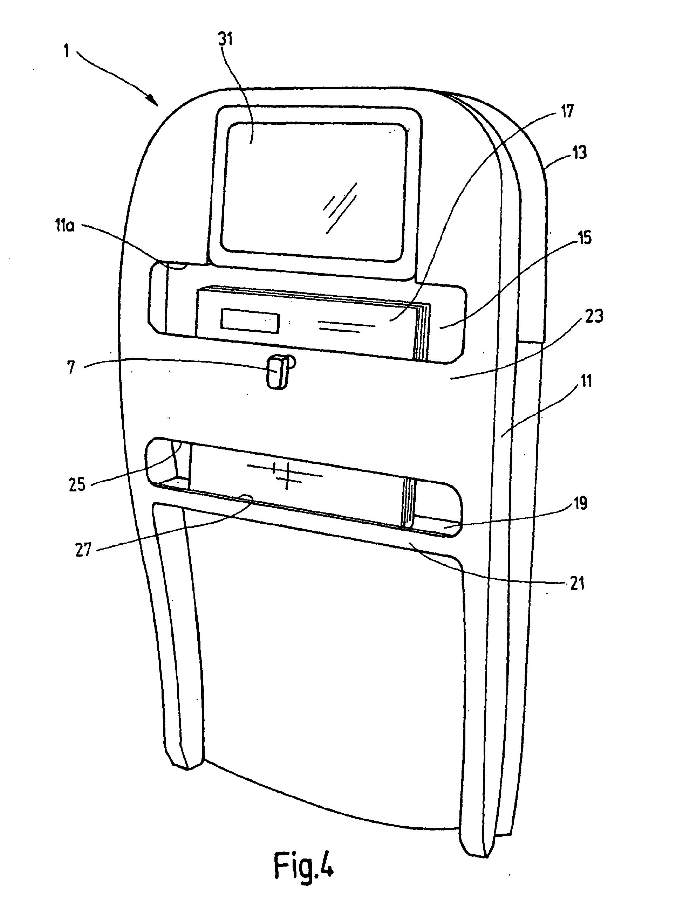

Bei dem weiteren Ausführungsbeispiel nach der Fig. 4 ist der obere Rand 11 a der Trägerstruktur 11 in Richtung des nicht näher dargestellten Eßtisches 3 derart um eine Höhe nach unten hin verlagert, dass ein Bildschirm 31 in die Trägerstruktur 11 integrierbar ist. Damit wird auf der Rückseite der Rückenlehne eine homogene Fläche erreicht, die im Falle eines Crashes oder eines Aufpralles eventuell eingeleitete Körperkräfte sicher aufnehmen und verteilen kann, um dergestalt die Verletzungsgefahr für einen rückwärtigen Sitzbenutzer möglichst klein zu halten.

Durch den Wegfall einer unterhalb des Eßtisches 3 im Kniebereich des unmittelbar dahinter gelegenen Fluggastsitzes befindlichen Tasche stellt der erfindungsgemäße Fluggastsitz für den Benutzer des unmittelbar dahinter liegenden Fluggastsitzes einen vergrößerten "Living-Space" zur Verfügung. Dank der Ausnutzung eines ansonsten innerhalb der Trägerstruktur 11 der Rückenlehne 1 nicht genutzten Hohlraumes als Behältnis oder Literaturtasche eröffnet sich somit, ohne entsprechende Nachteile in Kauf nehmen zu müssen, die Möglichkeit, eine engere Bestuhlung, betreffender Luftfahrzeuge vorzunehmen, und einen entsprechenden wirtschaftlichen Vorteil zu nutzen.

## Patentansprüche

1. Fluggastsitz mit einem Sitzteil und einer Rückenlehne (1) mit einer eine Rückenlehnenpolsterung (13) tragenden Trägerstruktur (11), an deren Rückseite ein an diese anklappbarer und in eine Gebrauchsstellung wegklappbarer Esstisch (3) sowie ein taschenartiges Behältnis (15) zur Aufnahme von Druckerzeugnissen (17) und Reiseutensilien angeordnet sind, wobei das Behältnis (15) durch einen Hohlraum gebildet ist, der sich in der Trägerstruktur (11) der Rückenlehne (1) zumindest teilweise zwischen dem angeklappten Esstisch (3) und der Rückenlehnenpolsterung (13) und vom Bereich des oberen Randes (11a) der Trägerstruktur (11) bis zu einem den Boden (19) des Behältnisses (15) bildenden Strukturelement (21) der Trägerstruktur (11) erstreckt, welches innerhalb des Flächenbereiches des angeklappten Esstisches (13) gelegen ist, und wobei der Hohlraum zur Bildung der Hauptöffnung des Behältnisses (15) in dem an den oberen Rand der Trägerstruktur (11) angrenzenden Bereich zur Rückseite hin offen ist, **dadurch gekennzeichnet, dass** die Trägerstruktur (11) der Rückenlehne (1) oberhalb des den Boden (19) des Behältnisses (15) bildenden Strukturelementes (21) eine die Rückwand des Behältnisses (15) bildende, zwischen beiden Seitenrändern der Trägerstruktur (11) durchgehende Platte (23) aufweist, an die der Esstisch (3) anklappbar ist, und dass die die Rückwand des Behältnisses (15) bildende Platte (23) eine Riegeleinrichtung zur Fixierung des Esstisches (3) in der angeklappten Stellung aufweist, wobei die Riegeleinrichtung einen Riegel (7) aufweist, der in der verriegelten Stellung des Esstisches (3) den oberen Rand des angeklappten Esstisches (3) übergreift.

2. Fluggastsitz nach Anspruch 1, **dadurch gekennzeichnet, dass** der obere Rand (11a) der Trägerstruktur (11) in Richtung des Esstisches (3) derart um eine Höhe verlagert ist, dass ein Bildschirm (31) in die Trägerstruktur (11) integrierbar ist.

3. Fluggastsitz nach Anspruch 1 oder 2, **dadurch gekennzeichnet, dass** zwischen dem den Boden (19) des Behältnisses (15) bildenden Strukturelement (21) und dem unteren Rand der die Rückwand des Behältnisses (15) bildenden Platte (23) eine schlitzartige bodenseitige Öffnung (25) des Behältnisses (15) ausgebildet ist.

4. Fluggastsitz nach Anspruch 3, **dadurch gekennzeichnet, dass** das den Boden (19) des Behältnisses (15) bildende Strukturelement (21) an seinem die bodenseitige Öffnung (25) des Behältnisses (15) begrenzenden Rand eine in die lichte Weite der bodenseitigen Öffnung (25) vorspringende Lippe (27) aufweist.

## Claims

1. Aircraft passenger seat with a seat part and a backrest (1) with a support structure (11) which supports a backrest padding (13) and on the rear side of which an eating table (3), which can be folded thereagainst and can be unfolded into a use position, and a pocket-like container (15) for holding printed materials (17) and travel items, are arranged, wherein the container (15) is formed by a cavity which extends in the support structure (11) of the backrest (1) at least partially between the folded-up eating table (3) and the backrest padding (13) and from the region of the upper edge (11a) of the support structure (11) as far as a structural element (21) of the support structure (11), which structural element forms the base (19) of the container (15) and is placed within the surface region of the folded-up eating table (3), and wherein the cavity is open towards the rear side in the region adjacent to the upper edge of the support structure (11) in order to form the main opening of the container (15), **characterized in that,** above the structural element (21) forming the base (19) of the container (15), the support structure (11) of the backrest (1) has a panel (23) which forms the rear wall of the container (15), passes between the two side edges of the support structure (11) and against which the eating table (3) can be folded, and **in that** the panel (23) forming the rear wall of the container (15) has a locking device for fixing the eating table (3) in the folded-up position, the locking device having a latch (7) which engages over the upper edge of the folded-up eating table (3) in the locked position of the eating table (3).

2. Aircraft passenger seat according to Claim 1,
**characterized in that** the upper edge (11a) of the support structure (11) is shifted in the direction of the eating table (3) by an amount such that a video screen (31) can be integrated into the support structure (11).

3. Aircraft passenger seat according to Claim 1 or 2, **characterized in that** a slot-like, base-side opening (25) of the container (15) is formed between the structural element (21) forming the base (19) of the container (15) and the lower edge of the panel (23) forming the rear wall of the container (15).

4. Aircraft passenger seat according to Claim 3, **characterized in that** the structural element (21) forming the base (19) of the container (15) has, on its edge delimiting the base-side opening (25) of the container (15), a lip (27) projecting into the clear width of the base-side opening (25).

## Revendications

1. Siège pour passager d'avion, avec une assise et un dossier (1) avec une structure de support (11) portant un rembourrage de dossier (13), sur la face arrière de laquelle sont disposés une tablette (3) pouvant être relevée contre celle-ci et abaissée dans une position d'utilisation ainsi qu'un récipient en forme de pochette (15) destiné à recevoir des imprimés (17) et des objets de voyage, le récipient (15) étant formé par une cavité qui s'étend dans la structure de support (11) du dossier (1), au moins en partie entre la tablette relevée (3) et le rembourrage de dossier (13) et depuis la région du bord supérieur (11a) de la structure de support (11) jusqu'à un élément de structure (21) de la structure de support (11) formant le fond (19) du récipient (15), lequel élément de structure (21) étant recouvert par la surface de la tablette relevée (3), la cavité étant ouverte vers la face arrière afin de former l'ouverture principale du récipient (15) dans la région adjacente au bord supérieur de la structure de support (11), **caractérisé en ce que** la structure de support (11) du dossier (1) présente, au-dessus de l'élément de structure (21) formant le fond (19) du récipient (15), une plaque (23) formant la paroi arrière du récipient (15) et continue entre les deux bords latéraux de la structure de support (11), la tablette (3) pouvant être relevée sur la plaque (23), et **en ce que** la plaque (23) formant la paroi arrière du récipient (15) présente un système de verrouillage pour fixer la tablette (3) dans la position relevée, le système de verrouillage comprenant un verrou (7), qui fixe la tablette relevée (3) dans sa position verrouillée en empiétant sur le bord supérieur de la tablette (3) relevée.

2. Siège pour passager d'avion selon la revendication 1, **caractérisé en ce que** le bord supérieur (11a) de la structure de support (11) est déplacé en hauteur, dans la direction de la tablette (3), de telle manière qu'un écran (31) puisse être intégré dans la structure de support (11).

3. Siège pour passager d'avion selon la revendication 1 ou 2, **caractérisé en ce qu'**une ouverture (25) en forme de fente est formée du côté du fond du récipient (15) entre l'élément de structure (21) formant le fond (19) du récipient (15) et le bord inférieur de la plaque (23) formant la paroi arrière du récipient (15).

4. Siège pour passager d'avion selon la revendication 3, **caractérisé en ce que** l'élément de structure (21) formant le fond (19) du récipient (15) présente, sur son bord délimitant l'ouverture (25) du côté du fond du récipient (15), une lèvre (27) saillante dans la largeur libre de l'ouverture du côté du fond (25).
